# FASCICULE DE BREVET EUROPEEN

(11) **EP 1 332 062 B1**
(45) Date de publication et mention de la délivrance du brevet: **23.08.2006**
(21) Numéro de dépôt: 01992652.6
(22) Date de dépôt: 06.11.2001
(51) Int. Cl.: B60J 7/14

(54) **TOIT ESCAMOTABLE POUR VEHICULE A ELEMENTS PIVOTANTS**
EINZIEHBARES KRAFTFAHRZEUGDACH MIT SCHWENKELEMENTEN
MOTOR VEHICLE RETRACTABLE ROOF WITH PIVOTING ELEMENTS

(30) Priorité: 06.11.2000 FR 0014187
(43) Date de publication de la demande: 06.08.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2001/003436
(87) Numéro de publication internationale: WO 2002/036378

(56) Documents cités:
- DE-C- 874 860
- US-A- 2 704 225

## Description

La présente invention concerne un toit escamotable ou rétractable dans le coffre arrière d'un véhicule.

Un tel toit escamotable permet notamment de transformer un véhicule du type coupé à deux places ou coupé ou berline à quatre places en un véhicule du type cabriolet.

Dans le cas des coupés ou berlines à quatre places, le toit présente une longueur relativement importante, de sorte que le toit escamotable est composé de trois éléments dont chacun doit avoir une longueur compatible avec les dimensions du coffre du véhicule,

On connaît ainsi un toit escamotable pour véhicule, comprenant un élément de toit avant, un élément de toit intermédiaire et un élément de toit arrière, ces trois éléments étant mobiles entre une position dans laquelle, ils recouvrent l'habitacle du véhicule et une position dans laquelle, ils sont superposés sensiblement horizontalement dans le coffre arrière du véhicule.

Le document US-A 2 704 225 montre un toit escamotable selon le préambule de la revendication 1.

Le but de la présente invention est d'apporter des perfectionnements aux moyens connus, pour commander et guider d'une manière optimale le déplacement des éléments du toit entre leur position de fermeture et leur position de rangement dans le coffre.

Le toit escamotable selon l'invention est défini par les caractéristiques de la revendication 1.

D'autres particularités et avantages de l'invention apparaîtront encore dans la description ci-après.

Aux dessins annexés, donnés à titre d'exemples non limitatifs :
- La figure 1 est une vue schématique en coupe longitudinale partielle d'un véhicule équipé d'un toit escamotable selon l'invention, en position fermée ;
- La figure 2 est une vue analogue à la figure 1, le toit escamotable étant dans une position intermédiaire ;
- La figure 3 est une vue analogue aux figures 1 et 2, le toit escamotable étant en position rangée dans le coffre du véhicule.

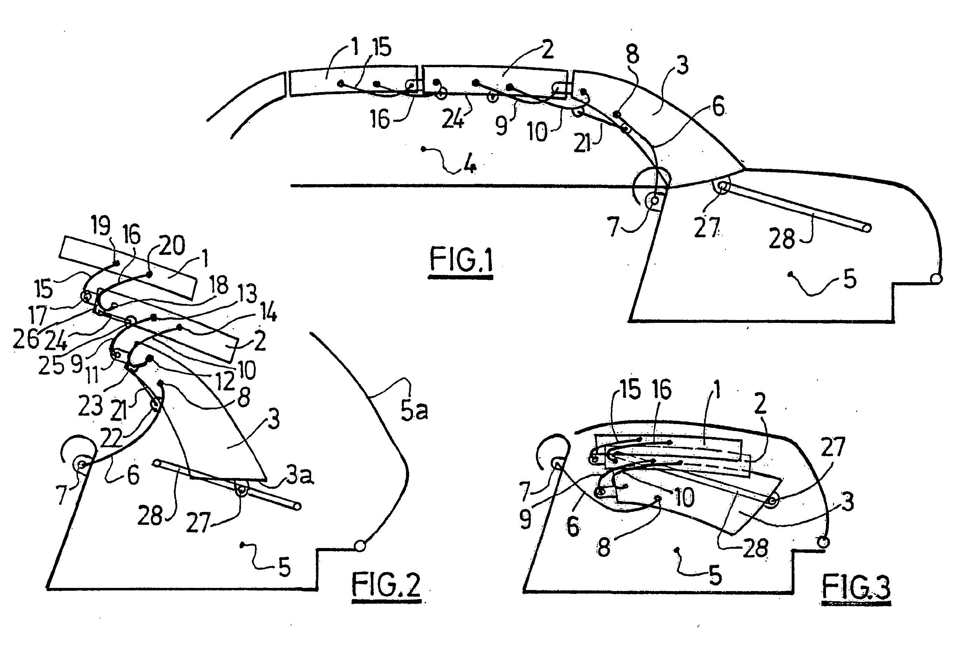

Dans la réalisation représentée sur les figures 1 à 3, le toit escamotable pour véhicule, comprend un élément de toit avant 1, un élément de toit intermédiaire 2 et un élément de toit arrière 3. Ces trois éléments 1, 2, 3 sont mobiles entre une position dans laquelle (voir figure 1) ils recouvrent l'habitacle 4 du véhicule et une position dans laquelle (voir figure 3), ils sont superposés sensiblement horizontalement dans le coffre arrière 5 du véhicule.

Conformément à l'invention, le déplacement de l'élément arrière 3 vers le coffre 5 est commandé par un bras 6 articulé en 7 au châssis du véhicule et en 8 à l'élément arrière 3.

L'élément arrière 3 est relié à l'élément intermédiaire 2 par deux leviers 9, 10 articulés en 11, 12 à l'élément arrière 3 et en 13, 14 à l'élément intermédiaire 2. Ces deux leviers 9, 10 forment ainsi un quadrilatère déformable.

Par ailleurs, l'élément intermédiaire 2 est relié à l'élément avant 1 par deux leviers 15, 16 articulés en 19, 20 à l'élément avant 1 et en 17, 18 à l'élément intermédiaire 2. Ces deux autres leviers 15, 16 forment ainsi un second quadrilatère déformable.

Le bras 6 est relié de façon articulée à l'un des deux leviers 9, 10 reliant les éléments arrière 3 et intermédiaire 2, par une biellette 21 articulée en 22 au bras 6 et en 23 levier 10

D'autre part, l'autre levier 9 reliant les éléments arrière 3 et intermédiaire 2 est relié à l'un 16 des leviers reliant les éléments intermédiaire 2 et avant 1, par une biellette 24 articulée en 25, 26 aux dits leviers 9 et 16.

Comme montré notamment par la figure 2, le déplacement de l'élément arrière 3 vers le coffre 5 est en outre commandé par un doigt 27 porté par la partie arrière 3a de l'élément arrière 3 engagé de façon coulissante dans une glissière 28 s'étendant à l'intérieur du coffre 5.

Au lieu de la glissière 28 et du doigt 27, le déplacement de l'élément arrière 3 vers le coffre 5 pourrait être commandé par un second bras (non représenté) articulé au châssis et à la partie arrière 3a de l'élément arrière 3.

Le toit escamotable que l'on vient de décrire fonctionne de la façon suivante :

Après déverrouillage des éléments 1, 2, 3 et ouverture du couvercle 5a, le bras 6 pivote vers l'arrière sous l'action d'un moteur ou d'un vérin (non représenté). Le mouvement du bras 6 entraîne l'élément arrière 3 vers l'arrière en faisant coulisser le doigt 27 le long de la glissière 28.

Le mouvement du bras 6 entraîne la biellette 21 et fait pivoter le levier 10 vers le haut, en entraînant dans le même sens le levier 9. Le déplacement des leviers 9, 10 vers le haut, fait passer l'élément intermédiaire 2 au-dessus de l'élément arrière 3.

En même temps, le mouvement du levier 9 entraîne la biellette 24 qui fait pivoter le levier 16 vers le haut en entraînant dans le même sens le levier 15 et le passage de l'élément avant 1 au-dessus de l'élément intermédiaire 2, comme indiqué sur la figure 2.

Les mouvements ci-dessus se poursuivent jusqu'à ce que les éléments 3, 2, 1 se superposent sensiblement horizontalement dans le coffre 5, comme indiqué sur la figure 3.

Dans une version simplifiée de l'invention, notamment dans le cas des coupés ne comportant que deux places, le toit escamotable pourrait ne comporter que les deux éléments 2 et 3.

## Revendications

1. Toit escamotable pour véhicule, comprenant au moins un élément de toit arrière (3) et un premier élément (2) de toit situé en avant de l'élément arrière (3), ces deux éléments étant mobiles entre une position, dans laquelle ils recouvrent l'habitacle (4) du véhicule, et une position, dans laquelle ils sont superposés sensiblement horizontalement dans le coffre arrière (5) du véhicule, le déplacement de l'élément arrière (3) vers le coffre (5) étant commandé par au moins un bras (6) articulé au châssis du véhicule et à l'élément arrière (3), **caractérisé en ce que** l'élément arrière (3) est relié au premier élément (2) situé en avant de l'élément arrière par deux leviers (9, 10) articulés audit élément arrière (3) et audit premier élément (2), ces deux leviers formant un quadrilatère déformable, **en ce que** ledit bras (6) est relié de façon articulée à l'un (10) des deux leviers reliant l'élément arrière (3) et le premier élément (2), par une biellette (21) articulée audit bras (6) et audit levier (10) et **en ce que** le déplacement de l'élément arrière vers le coffre (5) est en outre commandé par un doigt (27) porté par la partie arrière de l'élément arrière (3) engagé de façon coulissante dans une glissière (28) s'étendant à l'intérieur du coffre (5).

2. Toit escamotable selon la revendication 1, **caractérisé en ce qu'**il comprend en outre un deuxième élément de toit situé en avant du premier élément (2), le premier élément (2) étant relié au deuxième élément par deux autres leviers (15, 16) articulés audit premier élément et audit deuxième élément, ces deux autres leviers formant un quadrilatère déformable, **en ce que** le levier (9), reliant l'élément arrière (3) et le premier élément (2), est relié à l'un (16) des leviers reliant les premier et deuxième éléments, par une biellette (24) articulée auxdits leviers (9, 16).

3. Toit escamotable selon l'une des revendications 1 ou 2, **caractérisé en ce que** le déplacement de l'élément arrière vers le coffre (5) est en outre commandé par un second bras articulé au châssis et à la partie de l'élément arrière (3).

## Claims

1. Retractable roof for a vehicle, comprising at least one rear roof element (3) and one first roof element (2) situated to the front of the rear element (3), these two elements being mobile between a position in which they cover the passenger compartment (4) of the vehicle and a position in which they are placed substantially horizontally on top of each other in the rear boot (5) of the vehicle, the movement of the rear element (3) towards the boot (5) being controlled by at least one arm (6) articulated to the chassis of the vehicle and to the rear element (3), **characterised in that** the rear element (3) is connected to the first element (2) situated to the front of the rear element by means of two levers (9, 10) articulated to said rear element (3) and to said first element (2), these two levers forming a deformable quadrilateral, **in that** said arm (6) is connected in an articulated fashion to one (10) of the two levers that connect the rear element (3) and the first element (2), by means of a connecting rod (21) connected to said arm (6) and to said lever (10) and **in that** the movement of the rear element towards the boot (5) is also controlled by a finger (27) supported by the rear part of the rear element (3) inserted so as to slide in a guide rail (28) that extends into the boot (5).

2. Retractable roof according to claim 1, **characterised in that** it also comprises a second roof element situated to the front of the first element (2), the first element (2) being connected to said second element by means of two further levers (15, 16) connected to said first element and to said second element, these two further levers forming a deformable quadrilateral, **in that** the lever (9) that connects the rear element (3) to the first element (2) is connected to one (16) of the levers that connect the first and second elements, by means of a connecting rod (24) connected to said levers (9, 16).

3. Retractable roof according to either one of the claims 1 or 2, **characterised in that** the movement of the rear element towards the boot (5) is also controlled by a second arm connected to the chassis and to the part of the rear element (3).

## Patentansprüche

1. Schiebedach eines Fahrzeugs, das mindestens ein hinteres Dachelement (3) und ein erstes Dachelement (2) am vorderen Teil des hinteren Elementes (3) umfasst, wobei diese beiden Elemente zwischen einer Position, in der sie den Fahrzeuginnenraum (4) bedecken, und einer Position, in der sie waagrecht im Kofferraum (5) übereinander gelagert sind, bewegt werden können, wobei das Verschieben des hinteren Elements (3) zum Kofferraum (5) hin durch mindestens einen Arm (6) gesteuert wird, der am Rahmen des Fahrzeugs und am hinteren Element (3) beweglich befestigt ist, **dadurch gekennzeichnet, dass** das hintere Element (3) mit dem ersten Element (2) am vorderen Teil des hinteren Elements durch zwei Hebel (9, 10) verbunden ist, die mit besagtem hinteren Element (3) und besagtem ersten Element (2) beweglich verbunden sind, wobei diese beiden Hebel ein verformbares Viereck bilden, **dadurch gekennzeichnet, dass** besagter Arm (6) mit einem (10) der beiden Hebel, die das hintere Element (3) und das erste Element (2) verbinden, beweglich verbunden ist durch ein Pleuel (21), das mit besagtem Arm (6) und besagtem Hebel (10) beweglich verbunden ist, und **dadurch** dass das Verschieben des hinteren Elements zum Kofferraum (5) ferner durch einen Stift (27) gesteuert wird, der vom hinteren Teil des hinteren Elements (3) getragen wird, und gleitend in eine Schiene (28) eingefügt ist, die sich im innern des Kofferraums (5) erstreckt.

2. Fahrzeugschiebedach nach Anspruch 1, **dadurch gekennzeichnet, dass** es ferner ein zweites Dachelement an der vorderen Seite des ersten Elements (2) umfasst, wobei das erste Element (2) mit dem zweiten Element durch zwei weitere Hebel (15, 16) verbunden ist, die mit besagtem ersten Element und besagtem zweiten Element beweglich verbunden sind, wobei diese beiden anderen Hebel ein verformbares Viereck bilden, **dadurch gekennzeichnet, dass** Hebel (9), der das hintere Element (3) mit dem ersten Element (2) verbindet, mit einem (16) der Hebel verbunden ist, der das erste und zweite Element über ein Pleuel (24), das mit besagten Hebeln (9, 16) beweglich verbunden ist, miteinander verbindet.

3. Fahrzeugschiebedach nach einem der Ansprüche 1 oder 2, **dadurch gekennzeichnet, dass** das Verschieben des hinteren Elements zum Kofferraum (5) ferner durch einen zweiten Arm gesteuert wird, der mit dem Rahmen und dem Teil des hinteren Elements (3) beweglich verbunden ist.
